# EUROPEAN PATENT APPLICATION

(11) **EP 1 608 093 A1**
(43) Date of publication of application: **21.12.2005**
(21) Application number: 05253646.3
(22) Date of filing: 14.06.2005
(51) Int. Cl.: H04H 1/00

(54) **Method and apparatus for decoding MOT data**

(30) Priority: 15.06.2004 KR 2004044132
(71) Applicant: SAMSUNG ELECTRONICS CO., LTD., Suwon-si, Gyeonggi-do (KR)
(72) Inventor: Park, Ju-Hee, c/o 9 danji Apt., Yeongtong-gu Auwon-si Gyeonggi-do (KR); Park, Sung-il, Suwon-si Gyeonggi-do (KR); Park, Jeong-hoon, Gwanak-gu Seoul (KR); Seo, Ju-hee, c/o Byucksan Apt., Suwon-si Gyeonggi-do (KR); Youm, Sun-hee, Suwon-si Gyeonggi-do (KR)
(74) Representative: Robinson, Ian Michael

(57) **Abstract**

A method and apparatus for decoding multimedia object transfer (MOT) data, wherein the method includes receiving an MOT object (710) composed of real data and metadata (711) containing information regarding the real data and an MOT directory (740) including the metadata (711) and decoding the real data included in the MOT object (710) using the metadata (711) included in the MOT object (710) or the metadata (711) included in the MOT directory (740). In the method and apparatus, as a broadcasting service, a large media metafile is transmitted in an error-proof and time-saving way. Therefore, a receiving side can decode the large media metafile without errors, and randomly access and render it in real time.

## Description

The present invention relates to a broadcasting service, and more particularly, to a method and apparatus for decoding multimedia object transfer (MOT) data to transmit a large media metafile using a digital media broadcasting (DMB) data service.

As broadcasting goes digital, it has become possible to provide a variety of broadcasting services. In particular, in a data broadcasting service that offers multiple functions, new types of services and programs are provided that satisfy the needs of viewers.

A conventional multimedia object transfer (MOT) protocol will now be described. The "MOT protocol" transmits a multimedia object such as text, a still image, a moving image, or an audio sequence using a very high frequency (VHF) digital radio broadcasting data channel and contains basic expressions and rules of manipulating the multimedia object.

Generally, multimedia denotes information or expression in various forms or formats. Multimedia materials can be in the form of a container file, a file, or a packet and must be delivered in a usable form or a form required by a user before being expressed.

The way in which a multimedia service is expressed should be controlled, and the multimedia service should be able to be directly connected to hardware and software resources of a terminal. To properly express the multimedia service, time is one of the factors to be considered, and various different audio and video components must be synchronized. In other words, a specific operating environment is needed to express the multimedia service properly.

An object of the MOT protocol is a self-contained multimedia object such as Java and HTML and a real file such as a JPEG file, an ASCII text file, and an MPEG video or audio sequence. The MOT protocol uses a program associated data (PAD) channel or a packet mode data channel of the VHF digital radio broadcast to transmit a multimedia object.

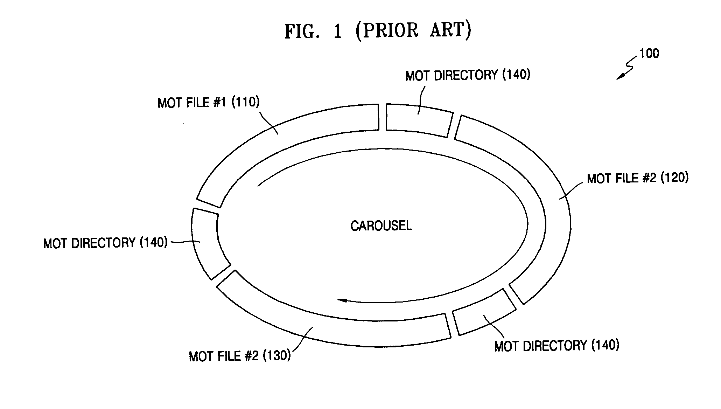

Figure 1 illustrates a conventional mechanism of broadcasting an MOT object using a data carousel 100. In the MOT protocol, a "directory" format provides a management mechanism for broadcasting an MOT object using a data carousel. A data carousel is a transmission mechanism that allows an application server to transmit a group of objects to an application decoder to express the objects. The application server transmits the contents of the data carousel repeatedly and cyclically.

A directory in a data carousel provides a clear description of the contents of the data carousel. That is, a header of an object is provided with sufficient information based on which data of the object can be retrieved. If an application requires a specific object, a receiver can examine a corresponding directory to determine whether the required object exists in the data carousel and the position of corresponding object data. If the object required by the user is not stored in a memory, the receiver may simply wait for the object to be broadcast next time.

Referring to Figure 1, the data carousel 100 includes three MOT files, i.e., an MOT file #1 110, an MOT file #2 120, and an MOT file #3 130. An MOT directory 140 is transmitted at intervals between transmissions of the three MOT files. The MOT directory 140 contains information regarding the three MOT files transmitted in the data carousel 100. The receiver can decode objects of the MOT files using the repeatedly received MOT directory 140.

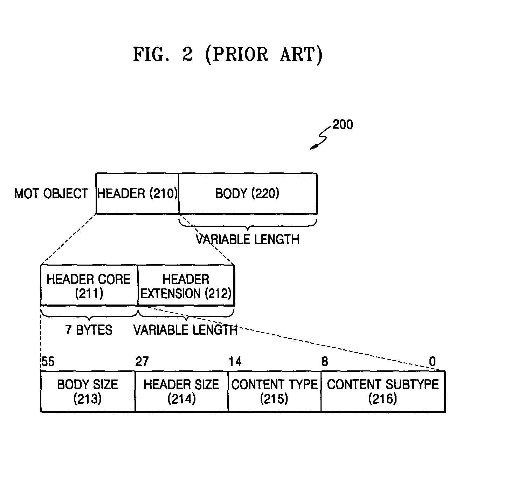

Figure 2 is a schematic view of a structure of a conventional MOT object 200. Referring to Figure 2, the MOT object 200 includes a header 210 and a body 220 sequentially connected. The header 210 includes a header core 211 and a header extension 212.

The header core 211 has information regarding the size and contents of the object 200. Based on this information, the receiver can determine whether system resources needed to decode and express the MOT object 200 are available. Specifically, the head core 211 is composed of four sub-fields, i.e., a body size 213, a header size 214, a content type 215, and a content subtype 216.

The header extension 212 contains information required for processing the MOT object 200 as well as additional information to be used for specific applications. The header extension 212 includes a number of parameters related to each file and its length is variable.

The body 220 may contain various types of data, and its structure will be described together with the header core 211 and the header extension 212.

The MOT object 200 is divided into a plurality of segments and then transmitted. Each segment includes more than one header 210 but may not include the body 220. Each segment is a data group.

When transmitting the MOT object 200, its header 210 is separated from its body for the following reasons. Before or while transmitting the body, the header can be transmitted several times. The header is transmitted to a receiver in advance so that the receiver can prepare for receiving data. The header is not while the body is being encoded. The header must be transmitted at least once before the body is transmitted.

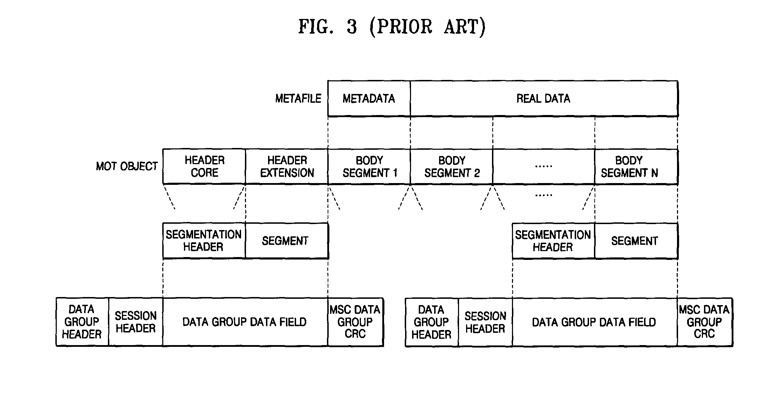

Figure 3 illustrates a detailed structure of a conventional MOT object. In a data stream of a sender, a data object to be transmitted is processed by an MOT encoder that generates an MOT object. That is, the data object is encoded into a PAD or packet form by the MOT encoder. Subsequent operations are described in a transmission matching standard used for VHF digital radio broadcasting. A sub-channel used for transmitting data objects in the packet form may include a plurality of service components, and each service component is a stream of an MOT object having a packet address. A sub-channel such as a stream mode audio, stream mode data, or a packet mode is multiplexed into a digital media broadcasting (DMB) ensemble.

When a data object to be transmitted, i.e., a metafile composed of metadata and real data, is received, an encoding process starts. In the encoding process, additional information, i.e., a header core and a header extension, is added to the metafile to create a complete MOT object. The MOT object thus created is divided into segments of an appropriate size, and a segment header is added to each segment. A packet mode and PAD encoder encodes the segments into data groups and, by extension, into packets appropriate for a transmission method of the DMB. A DMB encoder and multiplexer receives an output from the packet mode and PAD encoder and creates the packet mode sub-channel or adds the output to an X-PAD region of an audio stream.

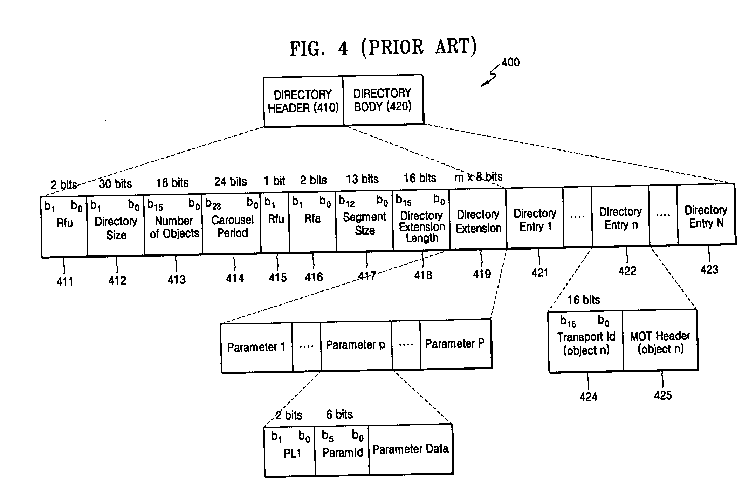

Figure 4 illustrates a structure of a conventional MOT directory 400. Referring to Figure 4, in a broad sense, the MOT directory 400 is composed of a directory header 410 and a directory body 420.

The directory header 410 includes an Rfu field 411 reserved for future use, a directory size field 412 indicating the size of the MOT directory 400, a number of objects field 413 indicating a total number of objects described by the MOT directory 400, a carousel period field 414 indicating the maximum time required to complete one cycle of an MOT carousel, an Rfu field 415 reserved for future use, an Rfa field 416 reserved for future addition, a segment size field 417 indicating the size of a segment to be used for the segmentation of an object within the MOT carousel, a directory extension length field 418 indicating the length of a directory extension field 419, and the directory extension field 419 presenting a list of parameters used to explain the entire MOT carousel.

The directory body 420 includes directory entries containing information regarding objects, respectively, explained by the MOT directory 400. Referring to Figure 4, the directory body 420 includes first through N^{th} directory entries 421 through 423.

The n^{th} directory entry 423 includes a transport ID 424 for an n^{th} object and an MOT header 425. The transport ID 424 identifies an object that a next MOT header refers to. In other words, the transport ID 424 is used to identify a specific instance of the object. The MOT header 425 carries information regarding a header core and header extension of the object.

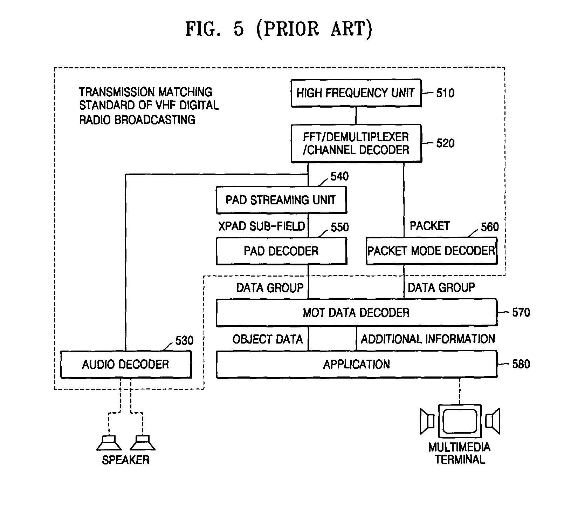

Figure 5 is a schematic block diagram of a conventional MOT data receiver. Referring to Figure 5, the MOT data receiver includes a high frequency unit 510, an FFT/demultiplexer/channel decoder 520, an audio decoder 530, a PAD streaming unit 540, a PAD decoder 550, a packet mode decoder 560, an MOT data decoder 570, and an application 580. MOT data received through a communications network is processed into a data group by the high frequency unit 510, the FFT/demultiplexer/channel decoder 520, the PAD streaming unit 540, the PAD decoder 550, and the packet mode decoder 560. The data group is input to the MOT data decoder 570.

The high frequency unit 510, the FFT/demultuplexer/channel decoder 520, the audio decoder 530, the PAD streaming unit 540, the PAD decoder 550, and the packet mode decoder 560 follow the VHF digital radio broadcasting transmission matching standard and will not be described.

A complete main service channel (MSC) data group is used for communications among the PAD decoder 550, the packet mode decoder 560, and the MOT data decoder 570. Object data output from the MOT data decoder 570 is carried by an MOT body, and additional information is carried by an MOT header. The additional information is decoded by the MOT data decoder 570.

Audio data decoded by the audio decoder 530 is reproduced through a speaker, and multimedia data interpreted by the application 580 is reproduced by a multimedia terminal. In such ways, real data is expressed.

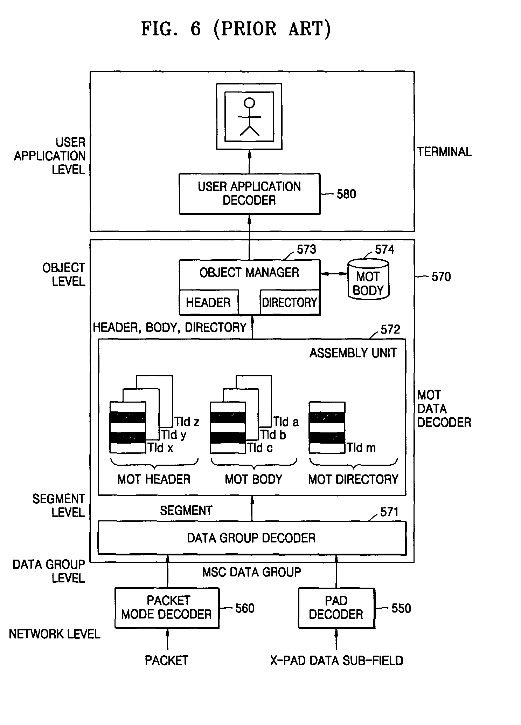

Figure 6 illustrates a detailed configuration of the MOT data decoder 570 in Figure 5. Figure 6 is a block diagram of the MOT data decoder 570 and an interface. Referring to Figure 6, the packet mode decoder 560 receives and processes a packet at a network level. The PAD decoder 550 receives and processes an X-PAD data subfield and outputs an MSC data group. The MSC data group is transmitted to the MOT data decoder 570.

The MSC data group is divided into segments by a data group decoder 571 at a data group level, and each of the segments is divided into assembly units 572 at a segment level. Each of the assembly units 572 is composed of an MOT header, an MOT body, and an MOT directory.

An object manager 573 receives the MOT header and the MOT directory and interprets data of an MOT body 574 using the MOT header and the MOT directory at an object level. The data interpreted by the object manager 573 is rendered by a user application decoder 580 at a user application level.

As described above, the conventional MOT protocol may provide a video service, an audio service, and additional & data services. In the conventional MOT protocol, small files can be easily transmitted to users as the additional & data services, but the transmission of large files such as media metafiles is greatly affected by the state of a broadcasting network. In addition, since a great number of users access the broadcasting network randomly, the receiving state of each user cannot be reflected to data transmission. Further, a lot of time is required to provide such services using the conventional MOT protocol.

According to the present invention there is provided an apparatus and method as set forth in the appended claims. Preferred features of the invention will be apparent from the dependent claims, and the description which follows.

The present invention provides a method and apparatus for decoding MOT data in which, as a broadcasting service, a large media metafile is transmitted in an error-proof and time-saving way to enable a receiving side to decode the large media metafile without errors.

According to an aspect of the present invention, there is provided a method and apparatus for decoding MOT data in which, as a broadcasting service, a large media metafile is transmitted in an error-proof and time-saving way to enable a receiving side to access the large media metafile randomly while rendering it in real time.

According to another aspect of the present invention, there is provided a method of decoding MOT data. The method includes receiving an MOT object composed of real data and metadata containing information regarding the real data and an MOT directory including the metadata; and decoding the real data included in the MOT object using the metadata included in the MOT object or the metadata included in the MOT directory.

The MOT directory may include more than one directory entry containing information regarding the MOT object, and each directory entry may contain the metadata of the MOT object and information regarding the length of the metadata.

According to another aspect of the present invention, there is provided a method of decoding MOT data. The method includes receiving an MOT object composed of real data and an MOT directory including metadata containing information regarding the real data; and decoding the real data included in the MOT object using the metadata included in the MOT directory.

The MOT directory may include more than one directory entry containing information regarding the MOT object, and each directory entry may contain the metadata of the MOT object and information regarding the length of the metadata.

According to another aspect of the present invention, there is provided a method of decoding MOT data. The method includes receiving chunk data comprising data chunks into which data of an MOT object is divided and an MOT file directory containing information regarding the data chunks; and decoding the data chunks using the information contained in the MOT file directory.

Each of the data chunks may include real data of the MOT object, and metadata of the MOT object may be included in the MOT file directory.

The chunk data may be composed of header information of the MOT object and the data chunks, and the header information may include a chunk index indicating positions of the respective data chunks in the MOT object.

The MOT file directory may include a list of directory entries, each containing information regarding each of the data chunks of the MOT object and metadata information containing information regarding the real data of the MOT object. Each directory entry may include a transport ID and header information of a corresponding data chunk. The metadata information may include the metadata of the MOT object and the length of the metadata.

According to another aspect of the present invention, there is provided an apparatus for decoding MOT data. The apparatus includes a decoder receiving an MOT object composed of real data and metadata containing information regarding the real data and an MOT directory including the metadata and decoding the real data included in the MOT object using the metadata included in the MOT object or the metadata included in the MOT directory.

According to another aspect of the present invention, there is provided an apparatus for decoding MOT data. The apparatus includes a decoder receiving an MOT object composed of real data and an MOT directory including metadata containing information regarding the real data and decoding the real data included in the MOT object using the metadata included in the MOT directory.

According to another aspect of the present invention, there is provided an apparatus for decoding MOT data. The apparatus includes a decoder receiving chunk data comprising data chunks into which data of an MOT object is divided and an MOT file directory containing information regarding the data chunks and decoding the data chunks using the information contained in the MOT file directory.

According to another aspect of the present invention, there is provided an apparatus for decoding MOT data. The apparatus includes a real data storage unit storing chunk data comprising data chunks into which an MOT object is divided and a chunk index indicating a position of each of the data chunks in the MOT object; and a metadata reader interpreting the chunk data stored in the real data storage unit using an MOT file directory including metadata of the MOT object.

The above and other aspects of the present invention will become more apparent by describing in detail exemplary embodiments thereof with reference to the attached drawings in which:
Figure 1 illustrates a conventional mechanism of broadcasting an MOT object using a data carousel;
Figure 2 is a schematic view of a structure of a conventional MOT object;
Figure 3 illustrates a detailed structure of a conventional MOT object;
Figure 4 illustrates a structure of a conventional MOT directory;
Figure 5 is a schematic block diagram of a conventional MOT data receiver;
Figure 6 is a block diagram of a conventional MOT data decoder in Figure 5;
Figure 7A illustrates a mechanism of broadcasting an MOT object using a data carousel according to the first exemplary embodiment of the present invention;
Figure 7B illustrates a mechanism of broadcasting an MOT object using a data carousel according to the second exemplary embodiment of the present invention;
Figure 8 illustrates a structure of an MOT directory according to the first and second exemplary embodiments of the present invention;
Figure 9 illustrates a mechanism of broadcasting an MOT object using a data carousel according to the third exemplary embodiment of the present invention;
Figure 10 illustrates a structure of an MOT file transmitted according to the third exemplary embodiment of the present invention;
Figure 11 illustrates a structure of a directory header field of the MOT file directory according to the third exemplary embodiment of the present invention;
Figure 12 illustrates a structure of a directory entry information field of the MOT file directory according to the third exemplary embodiment of the present invention;
Figure 13 illustrates a structure of a metadata information field of the MOT file directory according to the third exemplary embodiment of the present invention;
Figure 14 illustrates an overall flow of a meta format file transmitted according to the third exemplary embodiment of the present invention; and
Figure 15 is a block diagram of an MOT data decoder according to an exemplary embodiment of the present invention.

The present invention will now be described more fully with reference to the accompanying drawings, in which exemplary embodiments of the invention are shown. The invention may, however, be embodied in many different forms and should not be construed as being limited to the exemplary embodiments set forth therein; rather, these exemplary embodiments are provided so that this disclosure will be thorough and complete, and will fully convey the concept of the invention to those skilled in the art.

In a first exemplary embodiment of the present invention, metadata of a media object transfer (MOT) file is added to an MOT directory and then transmitted repeatedly to enable a receiver to be quickly prepared to render real data and have no errors.

In a second exemplary embodiment of the present invention, metadata is extracted from an MOT file, added to an MOT directory, and then transmitted repeatedly to enable a receiver to be quickly prepared to render real data and have no errors. The second exemplary embodiment is similar to the first exemplary embodiment, but the metadata is not transmitted to an MOT object.

In a third exemplary embodiment of the present invention, metadata is added to an MOT file directory and then transmitted. Real data of an MOT file is divided into a plurality of data chunks and then transmitted. A chunk index is attached to each data chunk to enable a receiver to randomly access data from a position in the MOT file using the chunk index and to render the data.

Hereinafter, the first through third exemplary embodiments of the present invention will be described.

### First exemplary embodiment

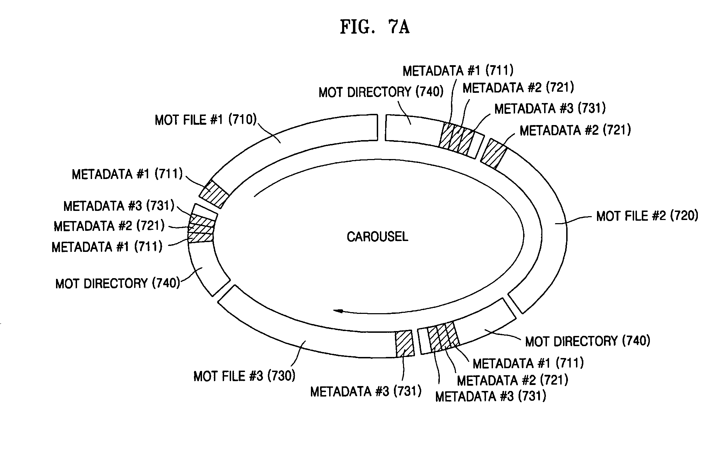

Figure 7A illustrates a mechanism of broadcasting an MOT object using a data carousel according to the first exemplary embodiment of the present invention. Referring to Figure 7A, the data carousel includes three MOT files, i.e., an MOT #1 710, an MOT file #2 720, and an MOT file #3 730. An MOT directory 740 is transmitted at intervals between transmissions of the three MOT files.

According to the first exemplary embodiment of the present invention, metadata #1 711 included in the MOT file #1 710, metadata #2 721 included in the MOT file #2 720, and metadata #3 731 included in the MOT file #3 730 are added to the MOT directory 740.

The metadata #1 711, metadata #2 721 and metadata #3 731 containing information regarding real data in the MOT file #1 710, MOT file #2 and MOT file #3 730, respectively, are transmitted not only through respective MOT file objects but also through the MOT directory 740 repeatedly. Hence, a receiver may receive, for example, the metadata #1 711 of the MOT file #1 710 through the MOT directory 740 without receiving the MOT file #1 710 completely. Consequently, the receiver can quickly obtain information regarding the MOT file #1 710, thereby enhancing its decoding performance.

Since metadata contains important information used to interpret real data, it is important to receive the metadata before the real data. It is also important to make sure that the metadata containing the important information is not lost. Therefore, the metadata must be repeatedly transmitted using the MOT directory 740 in order to reduce the likelihood of errors.

### Second exemplary embodiment

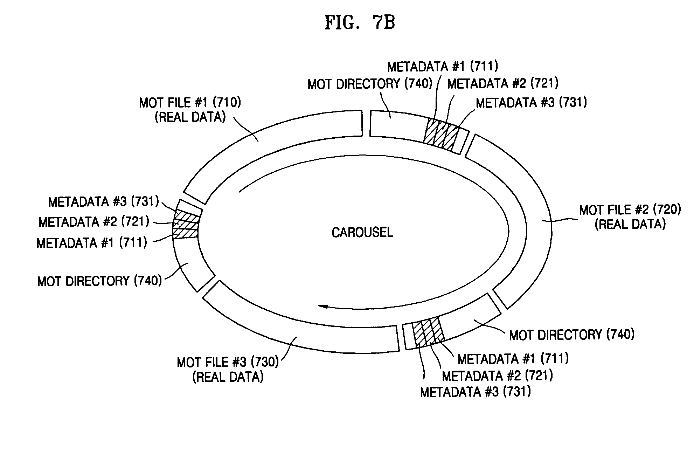

Figure 7B illustrates a mechanism of broadcasting an MOT object using a data carousel according to the second exemplary embodiment of the present invention. Referring to Figure 7B, the data carousel includes three MOT files, i.e., an MOT #1 710, an MOT file #2 720, and an MOT file #3 730. An MOT directory 740 is transmitted at intervals between transmissions of the three MOT files.

According to the second exemplary embodiment of the present invention, metadata #1 711 included in the MOT file #1 710, metadata #2 721 included in the MOT file #2 720, and metadata #3 731 included in the MOT file #3 730 are transmitted through the MOT directory 740.

The second exemplary embodiment is similar to the first exemplary embodiment in terms of structure and may generate similar effects. However, in the second exemplary embodiment, metadata is transmitted only through the MOT directory 740 and not through an MOT file object.

In other words, the MOT file includes only real data. The metadata is transmitted less frequently in the second exemplary embodiment than in the first exemplary embodiment, but still, it is transmitted repeatedly through the MOT directory 740.

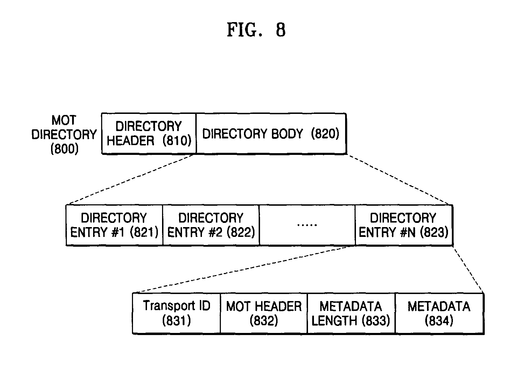

Figure 8 illustrates a structure of an MOT directory 800 according to the first and second exemplary embodiments of the present invention. Referring to Figure 8, the MOT directory 800 includes a directory header 810 and a directory body 820.

The directory header 810 has been described with reference to Figure 4. The directory body 820 includes directory entries #1 821 through #N 823. Each directory entry includes information regarding metadata according to the first and second exemplary embodiments of the present invention.

Referring to Figure 8, the directory entry #N 823 contains information regarding an MOT file #N. Specifically, the directory entry #N 823 includes a transport ID 831, an MOT header 832, a metadata length 833, and metadata 834.

The transport ID 831 is an ID given to transmit the MOT file #N. The MOT header 832 contains header information of the MOT file #N, i.e., header core information and header extension information. The metadata length 833 indicates the length of metadata 834 of the MOT file #N. The metadata 834 indicates metadata of the MOT file #N.

### Third exemplary embodiment

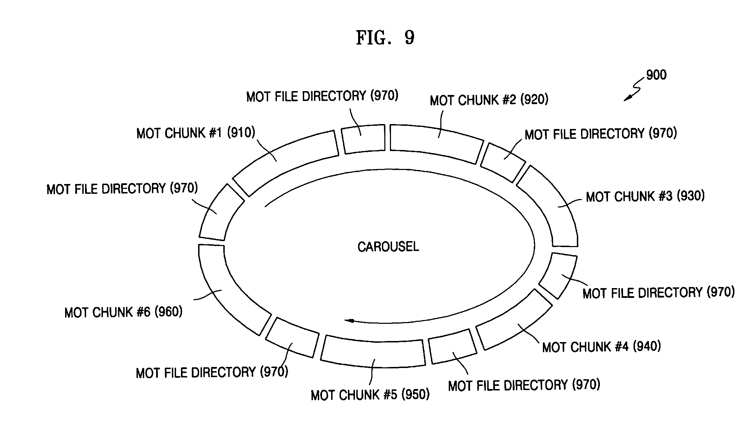

Figure 9 illustrates a mechanism of broadcasting an MOT object using a data carousel 900 according to the third exemplary embodiment of the present invention. Referring to Figure 9, the data carousel 900 includes an MOT file composed of MOT chunks #1 910 through MOT chunks #6 960. An MOT file directory 970 is transmitted at intervals between transmissions of the MOT chunks 1# through #6.

The MOT chunks #1 910 through MOT chunks #6 960 are "data chunks" into which the MOT file is divided. If a multimedia file to be transmitted is a large file, it is better to divide an MOT file into a plurality of data chunks and then transmit the data chunks.

The MOT file directory 970 contains information regarding the MOT chunks #1 through #6 910 through 960 transmitted within the data carousel 900. While a conventional MOT directory contains information regarding a plurality of MOT files transmitted within a data carousel, the MOT directory according to the third exemplary embodiment of the present invention contains information regarding one MOT file transmitted within the data carousel 900. In this regard, the MOT directory will be called the "MOT file directory" 970.

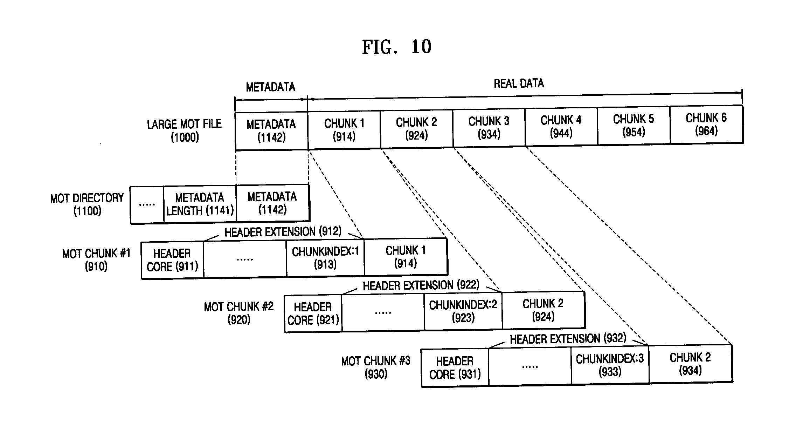

Figure 10 illustrates a structure of an MOT file 1000 transmitted according to the third exemplary embodiment of the present invention. Referring to Figure 10, the large MOT file 1000 is composed of metadata and real data. The real data in the MOT file 1000 is divided into a plurality of chunks. In Figure 10, the real data is divided into six chunks. In other words, the MOT file 1000 is composed of metadata 1142 and chunk 1 914 through chunk 6 964.

When the MOT file 1000 is transmitted using a data carousel, the metadata 1142 is added to the MOT file directory 1100 and then transmitted. The metadata 1142 contains chunk information. The metadata of the MOT file 1000 is included in the MOT file directory and transmitted repeatedly using an MOT protocol transmission method.

Header information is added to each of the chunks 1 through 6 (914 through 964), to form an MOT chunk. Then, the MOT chunk is transmitted.

For example, the MOT chunk #1 910 is composed of a header core 911, a header extension 912, and chunk 1 914. The header extension 912 includes chunk index:1 913, and the chunk index:1 913 is inserted into the MOT chunk #1 910 to indicate the position of the chunk 1 914 in the MOT file 1000, that is, the sequence of the chunk 1 914 in the MOT file 1000. Based on the chunk index:1 913, a receiver can access data in chunks, thereby enhancing decoding efficiency. Therefore, in an MOT carousel of a receiving side, such chunk information quickly indicates the position of information partly received in the entire file.

In this way, real data of an MOT file is divided into a plurality of chunks, which are included in a body in a general object structure and then transmitted. Since a chunk index parameter is specified in a header extension, it can inform a receiving side of the position of the real data in the MOT file. The receiving side can prepare for processing the real data because metadata is received before the real data is received completely.

Moreover, a received portion of the real data can be immediately rendered to users. The receiving side uses a chunk index to form a complete file using an MOT carousel. Thus, dividing a file into chunks before it is transmitted allows a receiving side to render the file from the middle. In addition, if data is lost or has an error, the receiving side can receive the data not from the beginning but only perceived error chunks, thereby saving processing time.

Since a file is transmitted in such a way, a process of reconfiguring media data into a packet can be omitted. Also, the file can be recorded while being played in real time even if a file storage system (recording system) is not included in the receiving side.

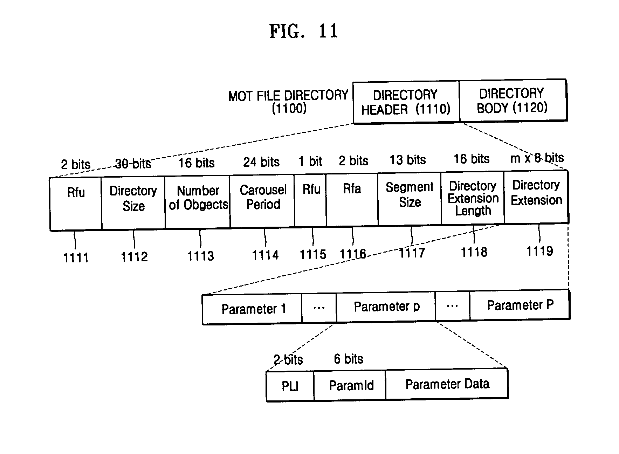

Figure 11 illustrates a structure of a directory header 1110 of the MOT file directory 1100 according to the third exemplary embodiment of the present invention. Referring to Figure 11, the MOT file directory 1100 is composed of the directory header 1110 and a directory body 1120.

The directory header 1110 includes an Rfu field 1111 reserved for future use, a directory size field 1112 indicating the size of the MOT file directory 1100, a number of objects field 1113 indicating a total number of objects described by the MOT file directory 1100, a carousel period field 1114 indicating maximum time required to complete one cycle of a data carousel, an Rfu field 1115 reserved for future use, an Rfa field 1116 reserved for future addition, a segment size field 1117 indicating the size of a segment to be used for the segmentation of an object within the data carousel, a directory extension length field 1118 indicating the length of a directory extension field 1119, and the directory extension field 1119 presenting a list of parameters used to explain the entire data carousel. The structure of the directory header 1110 is almost identical to that of the directory header 410 of Figure 4 except that, in the third exemplary embodiment of the present invention, the number of objects field 1113 indicates an object described by the MOT file directory 1100, i.e., the number of chunks.

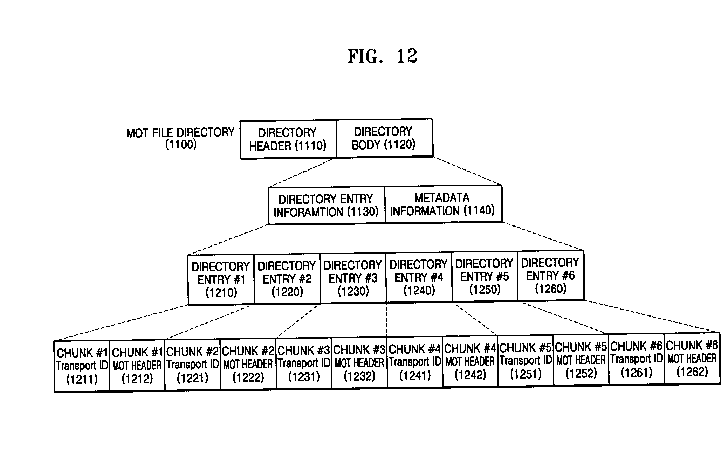

Figure 12 illustrates a structure of a directory entry information field 1130 of the MOT file directory 1100 according to the third exemplary embodiment of the present invention. Referring to Figure 12, the directory body 1120 is composed of the directory entry information field 1130 and a metadata information field 1140.

The directory entry information field 1130 is a list of information regarding an object included in the data carousel, i.e., each chunk and includes directory entries #1 through #6 1210 through 1260. Each directory entry is composed of a transport ID and an MOT header.

For example, the directory entry #1 1210 is composed of a chunk #1 transport ID 1211 and a chunk #1 MOT header 1212. The chunk #1 transport ID 1211 is a unique ID used to identify chunk #1 when transmitting the same. The chunk #1 MOT header 1212 includes header information regarding the chunk #1 and refers to a header core and a header extension added to each data chunk in Figure 11.

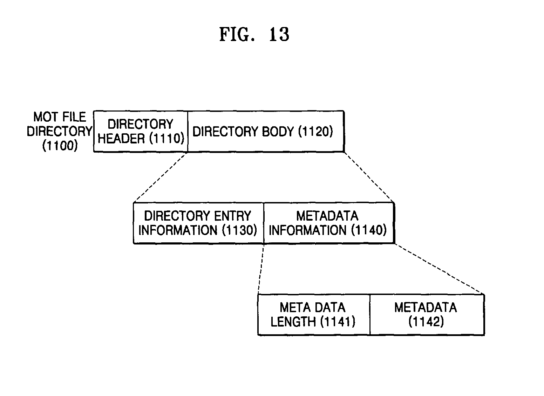

Figure 13 illustrates a structure of the metadata information field 1140 of the MOT file directory 1100 according to the third exemplary embodiment of the present invention. Referring to Figure 13, the metadata information field 1141 includes a metadata length field 1141 indicating the length of metadata 1142 of an MOT file transmitted in the data carousel and the metadata 1142.

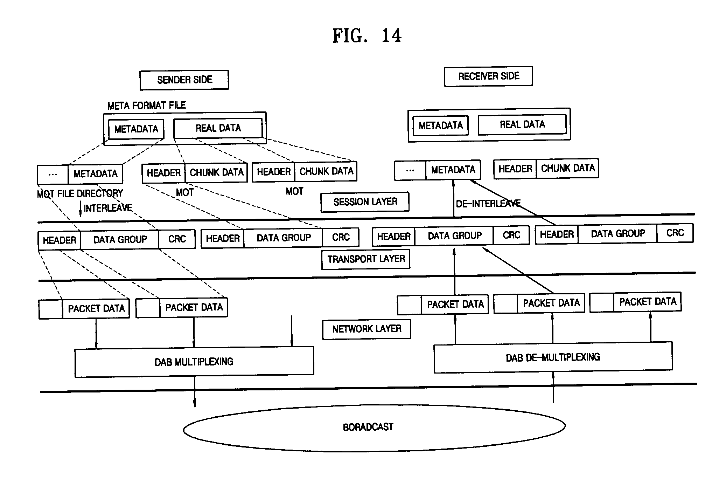

Figure 14 illustrates an overall flow of a meta format file transmitted according to the third exemplary embodiment of the present invention. Referring to Figure 14, a sender side divides the meta format file into metadata and real data. The sender side includes the metadata in an MOT file directory and divides the real data into chunks. The sender side generates an MOT object using each chunk data.

In a transport layer, the MOT file directory and the MOT object thus configured are divided into a predetermined number of units, and header information is added to each chunk data to produce a data group.

In a network layer, data in such a data group is converted into a predetermined packet, which is DAB-multiplexed and transmitted to a broadcasting network.

A receiver side DAB de-multiplexes the DAB-multiplexed data received from the broadcasting network into packets of data and transmits the packet data to the transport layer.

In the transport layer, data group data is obtained using the packet data and transmitted to a session layer.

In the session layer, the metadata and the chunk data are extracted using the data group data received and real data is obtained from the chunk data.

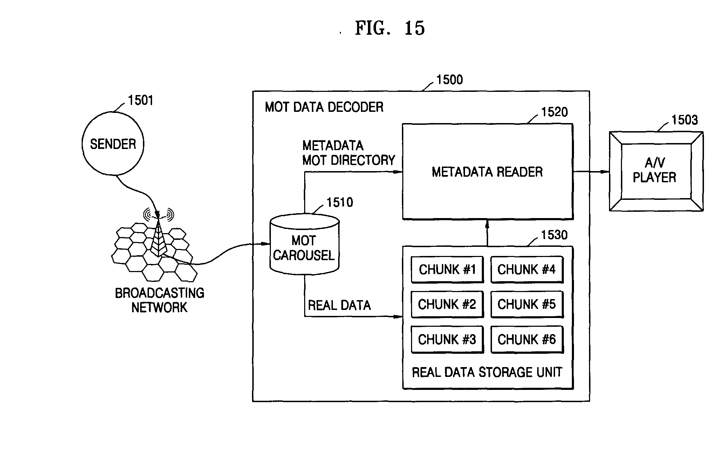

Figure 15 is a block diagram of an MOT data decoder 1500 according to an exemplary embodiment of the present invention. Referring to Figure 15, the MOT data decoder 1500 receives MOT data from a sender 1501 via a broadcasting network and transmits the MOT data to an A/V player 1503 to be reproduced.

Although not shown, the MOT data received from the broadcasting network is received by the MOT data decoder 1500 through several interfaces.

The MOT data decoder 1500 includes an MOT carousel 1510, a metadata reader 1520, and a real data storage unit 1530. The MOT carousel 1510 reconfigures the MOT data received from the sender 1501 and stores data composed of an MOT object and an MOT file directory.

Of the data stored in the MOT carousel 1510, metadata, the MOT directory, or an MOT file directory are transmitted to the metadata reader 1520. Real data is stored in the real data storage unit 1530.

The metadata reader 1520 reads and decodes the real data stored in the real data storage unit 1530 with reference to the received metadata, the MOT directory, or the MOT file directory, and transmits the decoded data to the A/V player 1503.

In the first exemplary embodiment of the present invention, the metadata reader 1520 receives the metadata and the MOT directory containing the metadata and decodes the real data stored in the real data storage unit 1530 with reference to the metadata or metadata contained in the MOT directory.

In the second exemplary embodiment of the present invention, since the metadata is included in the MOT directory and then transmitted, the metadata reader 1520 receives the MOT directory and decodes the real data stored in the real data storage unit 1530 with reference to the metadata contained in the MOT directory.

In the third exemplary embodiment of the present invention, the metadata reader 1520 receives the MOT file directory containing the metadata. Chunks of data into which the MOT file is divided are stored in the real data storage unit 1530. The metadata reader 1520 decodes the chunks of data stored in the real data storage unit 1530 using the metadata contained in the MOT file directory. The metadata contains information regarding each chunk of data, and each chunk of data stored in the real data storage 1530 has a chunk index. Therefore, the metadata reader 1520 can render the MOT file from the middle.

A method of decoding MOT data described above may be implemented as a computer-readable code on a computer-readable recording medium. The computer-readable recording medium can be all kinds of recording devices where data readable by a computer system is stored. The computer-readable recording medium includes a ROM, a RAM, a CD-ROM, a magnetic tape, a floppy disk and an optical data storage device, and may also be implemented as a carrier wave (for example, Internet transmission).

The computer-readable recording medium can be distributed over network-coupled computer systems so that the computer-readable code may be stored and executed in a distributed fashion. Functional programs, codes, and code segments required to implement the present invention can be easily derived by programmers skilled in the art.

As described above, in the present invention, metadata is added to an MOT directory and then transmitted or the metadata is extracted and then transmitted through the MOT directory. Therefore, the present invention may achieve faster file rendering and error handling.

If a terminal is unable to record media data, a transmitting side transmits the media data stably in a file. Therefore, a receiving side can record and render the media data in the file in real time. Further, even if a great number of users access a broadcasting network randomly, they can receive the file. A process of reconfiguring system information for recording can also be omitted.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of decoding multimedia object transfer (MOT) data, the method comprising:
receiving an MOT object (710) comprising real data and metadata (711) containing information regarding the real data, and an MOT directory (740) including the metadata (711); and
decoding the real data included in the MOT object (710) using the metadata (711) included in the MOT object (710) or the metadata (711) included in the MOT directory (740).

2. The method of claim 1, wherein the MOT directory (740) comprises a plurality of directory entries containing information regarding the MOT object (710), and each directory entry contains the metadata (711) of the MOT object (710) and information regarding a length of the metadata (711).

3. A method of decoding multimedia object transfer (MOT) data, the method comprising:
receiving an MOT object (710) comprising real data, and an MOT directory (740) including metadata (711) containing information regarding the real data; and
decoding the real data included in the MOT object (710) using the metadata (711) included in the MOT directory (740).

4. The method of claim 3, wherein the MOT directory (740) comprises a plurality of directory entries containing information regarding the MOT object (710), and each directory entry contains the metadata (711) of the MOT object (710) and information regarding a length of the metadata (711).

5. A method of decoding multimedia object transfer (MOT) data, the method comprising:
receiving chunk data (910-960) comprising data chunks (914-964) into which data of an MOT object (710) is divided and an MOT file directory (970) containing information (1142) regarding the data chunks (914-964); and
decoding the data chunks (914-964) using the information contained in the MOT file directory (970).

6. The method of claim 5, wherein each of the data chunks (914-964) includes real data of the MOT object (710), and metadata (1142) of the MOT object (710) is included in the MOT file directory (970).

7. The method of claim 5, wherein the chunk data (910-960) is composed of header information of the MOT object (710) and the data chunks (914-964), and the header information comprises a chunk index indicating positions of the data chunks (914-964) in the MOT object (710).

8. The method of claim 5, wherein the MOT file directory (970) comprises a list of directory entries, each of the directory entries containing information regarding each of the data chunks (914-964) of the MOT object (710) and metadata information containing information regarding real data of the MOT object (710).

9. The method of claim 8, wherein each directory entry comprises a transport ID and header information of a corresponding data chunk.

10. The method of claim 8, wherein the metadata (1142) information comprises the metadata (1142) of the MOT object (710) and a length of the metadata (1142).

11. An apparatus for decoding MOT data, the apparatus comprising a decoder (1500) receiving an MOT object (710) composed of real data and metadata (711) containing information regarding the real data and an MOT directory (740) including the metadata (711) and decoding the real data included in the MOT object (710) using the metadata (711) included in the MOT object (710) or the metadata (711) included in the MOT directory (740).

12. The apparatus of claim 11, wherein the MOT directory (740) comprises a plurality of directory entries containing information regarding the MOT object (710), and each directory entry contains the metadata (711) of the MOT object (710) and information regarding the length of the metadata (711).

13. An apparatus for decoding multimedia object transfer (MOT) data, the apparatus comprising a decoder (1500) which receives an MOT object (710) composed of real data and an MOT directory (740) including metadata (711) containing information regarding the real data, and decodes the real data included in the MOT object (710) using the metadata (711) included in the MOT directory (740).

14. The apparatus of claim 13, wherein the MOT directory (740) comprises a plurality of directory entries containing information regarding the MOT object (710), and each directory entry contains information regarding the metadata (711) of the MOT object (710) and a length of the metadata (711).

15. An apparatus for decoding multimedia object transfer (MOT) data, the apparatus comprising a decoder (1500) which receives chunk data (910-960) comprising data chunks (914-964) into which data of an MOT object (710) is divided and an MOT file directory (970) containing information (1142) regarding the data chunks (914-964), and decodes the data chunks (914-964) using the information contained in the MOT file directory (970).

16. The apparatus of claim 15, wherein each of the data chunks (914-964) includes real data of the MOT object (710), and metadata (1142) of the MOT object (710) is included in the MOT file directory (970).

17. The apparatus of claim 15, wherein the chunk data (910-960) comprises header information and the data chunks (914-964) of the MOT object (710), and the header information comprises a chunk index indicating positions of the data chunks (914-964) in the MOT object (710).

18. The apparatus of claim 15, wherein the MOT file directory (970) comprises a list of directory entries containing information regarding the data chunks (914-964) of the MOT object (710) and metadata (1142) information containing information regarding real data of the MOT object (710).

19. The apparatus of claim 18, wherein each directory entry comprises a transport ID and header information of a corresponding data chunk.

20. An apparatus for decoding multimedia object transfer (MOT) data, comprising:
a real data storage unit (1530) which stores chunk data (910-960) comprising data chunks (914-964) into which an MOT object (710) is divided and a chunk index indicating a position of each of the data chunks (914-964) in the MOT object (710); and
a metadata reader (1520) which interprets the chunk data (910-960) stored in the real data storage unit using an MOT file directory (970) including metadata (1142) of the MOT object (710).
